# EUROPEAN PATENT APPLICATION

(11) **EP 2 824 937 A1**
(43) Date of publication of application: **14.01.2015**
(21) Application number: 14176260.9
(22) Date of filing: 09.07.2014
(51) Int. Cl.: H04N 21/4363, H04N 21/4402

(54) **Video processing device for reformatting an audio/video signal and methods for use therewith**

(30) Priority: 12.07.2013 US 201313940425
(71) Applicant: ViXS Systems Inc., Toronto, ON M2K 1E3 (CA)
(72) Inventor: Kelton, James Robert, Austin, TX Texas 78750 (US); Yeh, Chun-Chin, Markham, Ontario L3R 7R2 (CA)
(74) Representative: Benson, Christopher

(57) **Abstract**

A video processing device includes a decoding device that decodes a compressed audio/video (A/V) signal to generate a decoded A/V signal in a reduced blanking format for transmission via a first home digital media interface. A reformatting device receives the decoded A/V signal via the first home digital media interface and scales the decoded A/V signal into a processed A/V signal for transmission via a second home digital media interface. The first home digital media interface and the second home digital media interface have differing data formats.

## Description

### TECHNICAL FIELD

Various embodiments relate to coding used in devices such as video decoders for video signals.

### DESCRIPTION OF RELATED ART

Video encoding has become an important issue for modern video processing devices. Robust encoding algorithms allow video signals to be transmitted with reduced bandwidth and stored in less memory. However, the accuracy of these encoding methods face the scrutiny of users that are becoming accustomed to greater resolution and higher picture quality. Standards have been promulgated for many encoding methods including the H.264 standard that is also referred to as MPEG-4, part 10 or Advanced Video Coding, (AVC). While this standard sets forth many powerful techniques, further improvements are possible to improve the performance and speed of implementation of such methods. The video signal encoded by these encoding methods must be similarly decoded for playback on most video display devices.

An ultra high-definition television (UHDTV) standard has been set that defines a picture with a minimum resolution of 3840x2160 pixels. This format has four times the number of pixels than a 1080p high definition signal. The higher data content in UHDTV requires greater data rates to transmit. Further limitations and disadvantages of conventional and traditional approaches will become apparent to one of ordinary skill in the art through comparison of such systems with the present invention.

### BRIEF DESCRIPTION OF THE SEVERAL VIEWS OF THE DRAWINGS

FIGs. 1-3 present pictorial diagram representations of various video devices in accordance with various embodiments.
FIG. 4 presents a block diagram representation of a video system in accordance with an embodiment.
FIG. 5 presents a block diagram representation of a video system in accordance with another embodiment.
FIG. 6 presents a block diagram representation of a video processing device in accordance with an embodiment.
FIG. 7 presents a block diagram representation of a reformatting device in accordance with an embodiment.
FIG. 8 presents a graphical representation of a scaling of pixels in accordance with an embodiment.
FIG. 9 presents a graphical representation of a scaling of pixels in accordance with another embodiment.
FIG. 10 presents a graphical representation of a scaling of pixels in accordance with another embodiment.
FIG. 11 presents a flow diagram representation of a method in accordance with an embodiment.

### DETAILED DESCRIPTION INCLUDING THE PRESENTLY PREFERRED

### EMBODIMENTS

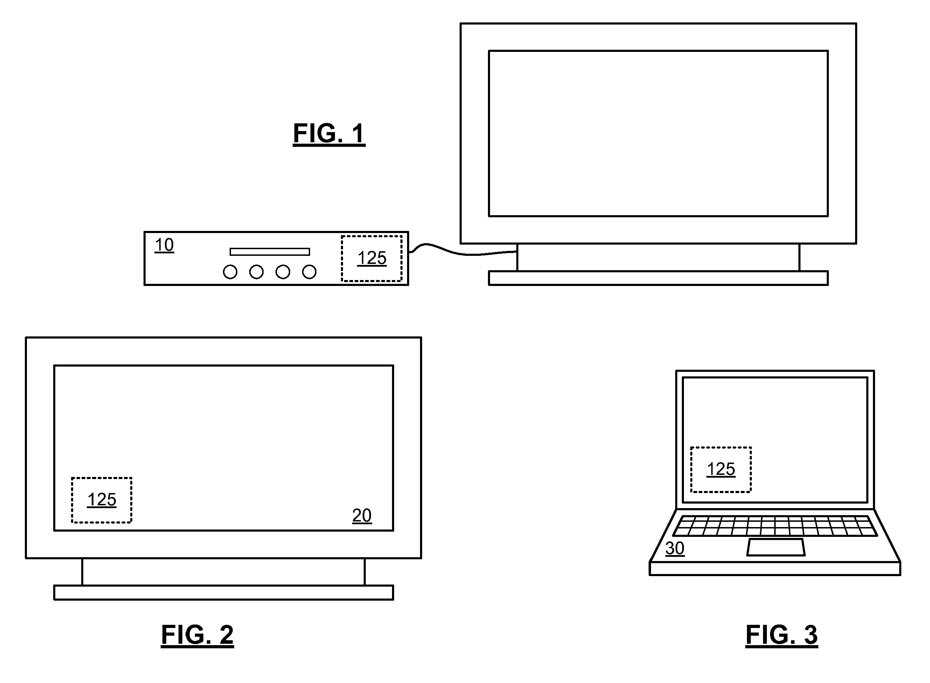

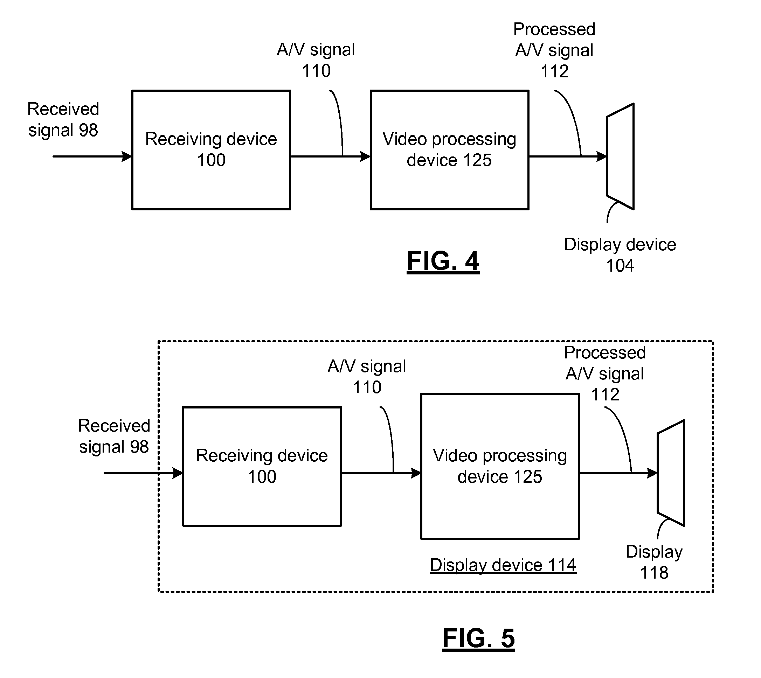

FIGs. 1-3 present pictorial diagram representations of various video devices in accordance with various embodiments. In particular, set top box 10 with or without built-in digital video recorder functionality or a stand alone digital video recorder, television or monitor 20 and portable computer 30 illustrate electronic devices that incorporate a video processing device 125 in accordance with one or more features or functions of the present invention. While these particular devices are illustrated, the present invention can be implemented in any device that is capable of decoding and/or transcoding video content in accordance with the methods and systems described in conjunction with FIGs. 4-11 and the appended claims.

FIG. 4 presents a block diagram representation of a video system in accordance with an embodiment. In particular, this video system includes a receiving module 100, such as a television receiver, cable television receiver, cable modem, satellite broadcast receiver, broadband modem, 3G transceiver or other information receiver or transceiver that is capable of receiving a received signal 98 and generating an audio/video (A/V) signal 110 that has been encoded via a video encoding format. Video processing device 125 is coupled to the receiving module 100 to decode or transcode the video signal into processed A/V signal 112 for storage, editing, display and/or playback in a format corresponding to video display device 104. As discussed in conjunction with FIGs. 1-3, the video processing device 125 can be included in set top box 10 with built-in digital video recorder functionality or a stand alone digital video recorder.

In an embodiment of the present invention, the received signal 98 is a broadcast video signal, such as an ultra high definition (UHD) television signal, high definition television signal, enhanced definition television signal or other broadcast video signal that has been transmitted over a wireless medium, either directly or through one or more satellites or other relay stations or through a cable network, optical network or other transmission network. In addition, received signal 98 can be generated from a stored video file, played back from a recording medium such as a magnetic tape, magnetic disk or optical disk, and can include a streaming video signal that is transmitted over a public or private network such as a local area network, wide area network, metropolitan area network or the Internet.

A/V signal 110 can include a digital video signal complying with a digital video codec standard such as H.265 high efficiency video coding (HEVC), H.264 MPEG-4 Part 10 Advanced Video Coding (AVC) including a SVC signal, an encoded stereoscopic video signal having a base layer that includes a 2D compatible base layer and an enhancement layer generated by processing in accordance with an MVC extension of MPEG-4 AVC, or another digital format such as a Motion Picture Experts Group (MPEG) format (such as MPEG1, MPEG2 or MPEG4), Quicktime format, Real Media format, Windows Media Video (WMV) or Audio Video Interleave (AVI), video coding one (VC-1), etc.

In an embodiment, the A/V signal 110 can include a digital audio signal, such as a PCM coded audio signal that is has been compressed via audio compression. In addition, the A/V signal 110 can include encryption data, metadata and/or other control information.

Video display devices 104 can include a television, monitor, computer, handheld device or other video display device that creates an optical image stream either directly or indirectly, such as by projection, based on the processed A/V signal 112 either as a streaming video signal or by playback of a stored digital video file.

FIG. 5 presents a block diagram representation of a video system in accordance with another embodiment. In particular, an embodiment is presented that includes similar functions and features as described in conjunction with FIG. 4. In this embodiment however, the receiving device 100 and video processing device are included in a display device 114 such as a television, monitor, computer, handheld device or other video display device that creates an optical image stream either directly or indirectly, such as by projection, based on the processed A/V signal 112, via display 118.

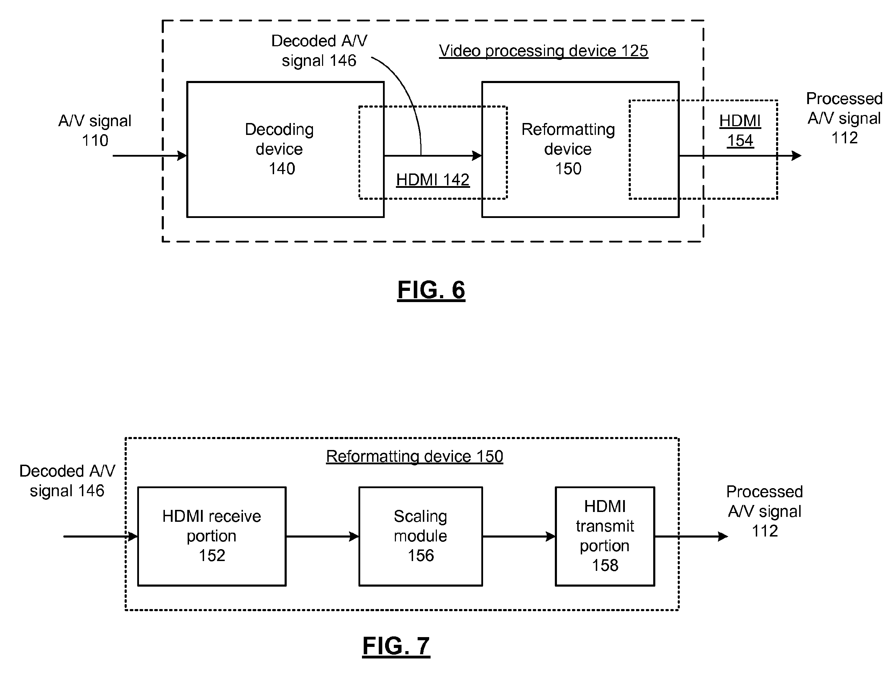

FIG. 6 presents a block diagram representation of a video processing device in accordance with an embodiment. The video processing device 125 includes a decoding device 140 that decodes a compressed audio/video (A/V) signal such as A/V signal 110 to generate a decoded A/V signal 146 in a reduced blanking format for transmission via a home digital media interface 142 to reformatting device 150. The reformatting device 150 receives the decoded A/V signal 146 via the home digital media interface 142 and scales the decoded A/V signal 146 into a processed A/V signal 112 for transmission via the home digital media interface.

The home digital media interface 142 and the home digital media interface 154 have differing data formats. For example, HDMI 142 may be compliant with the 1.4b standard and HDMI 154 can be compliant with a 2.0 or higher standard. Further, while described in context of HDMI standards, HDMI 142 and 154 can be implemented via other signal interfaces with differing data formats. It should be noted that the HDMI 142 and 154 each include corresponding transmit and receive portions that implement physical layer signaling and other coding and formatting in accordance with their respective standards.

In one example of operation, A/V signal 110 contains an ultra HD signal such as a 3840x2160p 50 Hz or 60Hz, 10 bit signal that is encoded via H.265, H.264, VCl or other video compression standard and also is encrypted. With full blanking, the signal is 4400x2160. The decoding device 140 operates to decrypt and decode the A/V signal 110 to produce the decoded A/V signal 146 as a 3840x2160p 50 Hz or 60Hz, 10 bit 4:2:0 signal -- with reduced horizontal and vertical resolution for chroma values. In addition, the decoded A/V signal 146 is formatted with reduced blanking such as 4000x2160 or 4kx2k instead of full 4400x2160. The decoded A/V signal is optionally unencrypted and formatted for transmission via HDMI 142 in compliance with the 1.4b HDMI standard.

For example, the table below describes two reduced blanking modes to support 4kx2k within a 340MHz TMDS clock rate. The parameters are shown for the 8-bit case as is customary in the HDMI standards even though this mode is intended mainly for 10-bit.

| **Description** | **4kx2k 60Hz** | **4kx2k 50Hz** |
|---|---|---|
| Pixel Freq. (MHz) | 540 | 540 |
| Format | 4:2:0 | 4:2:0 |
| Vfreq (Hz) | 60 | 50 |
| Hactive | 3840 | 3840 |
| Hblank | 160 | 960 |
| Hfront | 16 | 16 |
| Hsync | 44 | 44 |
| Hback | 100 | 900 |
| Vactive | 2160 | 2160 |
| Vblank | 90 | 90 |
| Vfront | 8 | 8 |
| Vsync | 10 | 10 |
| Vback | 72 | 72 |

The mapping of the 10-bit video data onto the 8-bit channels could be the same as the standard deep color pixel packing in section 6.5.2 of HDMI 1.4b standard. A comparison of the 4:2:0 and 4:4:4 mapping is shown below.

| 4:4:4 Mapping: | | | | | |
|---|---|---|---|---|---|
| **All active lines** | | | | | |
| **Lane 0** | Cb0 | Cb1 | Cb2 | Cb3 | ... |
| **Lane 1** | Y0 | Y1 | Y2 | Y3 | ... |
| **Lane 2** | Cr0 | Cr1 | Cr2 | Cr3 | ... |

| 4:2:0 Mapping: | | | | | |
|---|---|---|---|---|---|
| **Even active lines** | | | | | |
| **Lane 0** | Y1 | Y3 | Y5 | Y7 | ... |
| **Lane 1** | Y0 | Y2 | Y4 | Y6 | ... |
| **Lane 2** | Cb0 | Cb1 | Cb2 | Cb3 | ... |
| | | | | | |

| **Odd active lines** | | | | | |
|---|---|---|---|---|---|
| **Lane 0** | Y1 | Y3 | Y5 | Y7 | ... |
| **Lane 1** | Y0 | Y2 | Y4 | Y6 | ... |
| **Lane 2** | Cr0 | Cr1 | Cr2 | Cr3 | ... |

The VIC code can be 0x7d for 60 Hz frame rates and 0x7e for 50 Hz frame rates. The HDMI video format field of the VSIF can be 0b001.

The decoding device 140 and reformatting device 150 can each be implemented using a single processing device or a plurality of processing devices. Such a processing device may be a microprocessor, co-processors, a micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions that are stored in a memory. This memory may be a single memory device or a plurality of memory devices. Such a memory device can include a hard disk drive or other disk drive, read-only memory, random access memory, volatile memory, non-volatile memory, static memory, dynamic memory, flash memory, cache memory, and/or any device that stores digital information. Note that when the decoding device 140 and reformatting device 150 implement one or more of their functions via a state machine, analog circuitry, digital circuitry, and/or logic circuitry, the memory storing the corresponding operational instructions may be embedded within, or external to, the circuitry comprising the state machine, analog circuitry, digital circuitry, and/or logic circuitry.

FIG. 7 presents a block diagram representation of a reformatting device in accordance with an embodiment. In particular, reformatting device 150 includes a HDMI receive portion 152 that corresponds to a receiving portion of HDMI 142 and a HDMI transmit portion 158 that corresponds to a transmit portion of HDMI 154. The reformatting device 150 includes a scaling module 156 that includes one or more upscaling and/or downscaling portions. These upscaling and/or downscaling portions can include horizontal and/or vertical upsamplers or downsamplers for adjusting the resolution of the luma and/or chroma pixels, and optionally other components to adjust the color depth and/or frame rate of the decoded A/V signal 146.

Consider the example presented in conjunction with FIG. 6 where the decoded A/V signal 146 as a reduced blanking 3840x2160p 60Hz, 10 bit 4:2:0 signal. In accordance with this example, the reformatting device 150 operates as a bridge chip to receive the reduced blanking 3840x2160p 60Hz, 10 bit 4:2:0 signal and upscales this signal into a 3840x2160p 60Hz, 10 bit 4:2:2 signal for transmission via HDMI 154 such as a HDMI 2.0 compliant interface or other interface. In further examples, the processed A/V signal 112 can be in a 3840x2160p 60Hz, 10 bit 4:1:1 format, a 3840x2160p 60Hz, 10 bit 4:4:4 format, a 7680x4320p format, a 50 Hz format, 120Hz format, a 12 bit or 16 bit format or other format. In particular, the processed A/V signal 112 can be in any standard format or in any other format that is compatible with the display or display device. It should also be noted that the blanking can be reduced to be compliant with the HDMI 142 interface. Further, the processed A/V signal 112 can be encrypted or unencrypted.

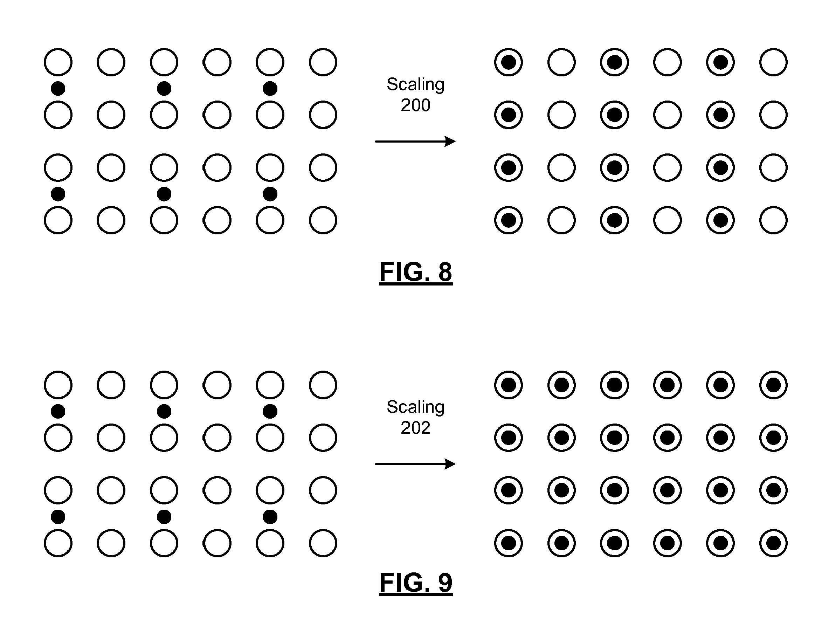

FIG. 8 presents a graphical representation of a scaling of pixels in accordance with an embodiment. One example of scaling via scaling module 156 is presented. In particular, a small group of pixels of a video signal is presented. Open circles represent pixels with only luma values. Open circles with inner filled circles represent pixels with both luma and chroma values. Filled circles alone represent pixels with only chroma values.

In this diagram a signal in 4:2:0 format with full luma pixel resolution and ½ horizontal and vertical chroma resolution is upsampled to generate a signal in 4:2:2 format. In particular, the scaling 200 includes a 2:1 vertical upsampling of chroma values.

FIG. 9 presents a graphical representation of a scaling of pixels in accordance with another embodiment. A further example of scaling via scaling module 156 is presented. Pixels are represented in a similar format as discussed in conjunction with FIG. 8.

In this diagram a signal in 4:2:0 format with full luma pixel resolution and ½ horizontal and vertical chroma resolution is upsampled to generate a signal in 4:4:4 format. In particular, the scaling 202 includes a 2:1 vertical and horizontal upsampling of chroma values.

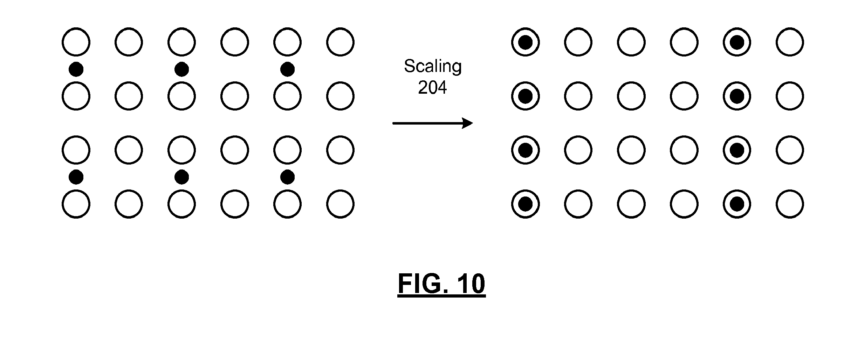

FIG. 10 presents a graphical representation of a scaling of pixels in accordance with another embodiment. An additional example of scaling via scaling module 156 is presented. Pixels are represented in a similar format as discussed in conjunction with FIG. 8.

In this diagram a signal in 4:2:0 format with full luma pixel resolution and ½ horizontal and vertical chroma resolution is upsampled to generate a signal in 4:1:1 format. In particular, the scaling 204 includes a 2:1 vertical upsampling and a horizontal downsampling of chroma values.

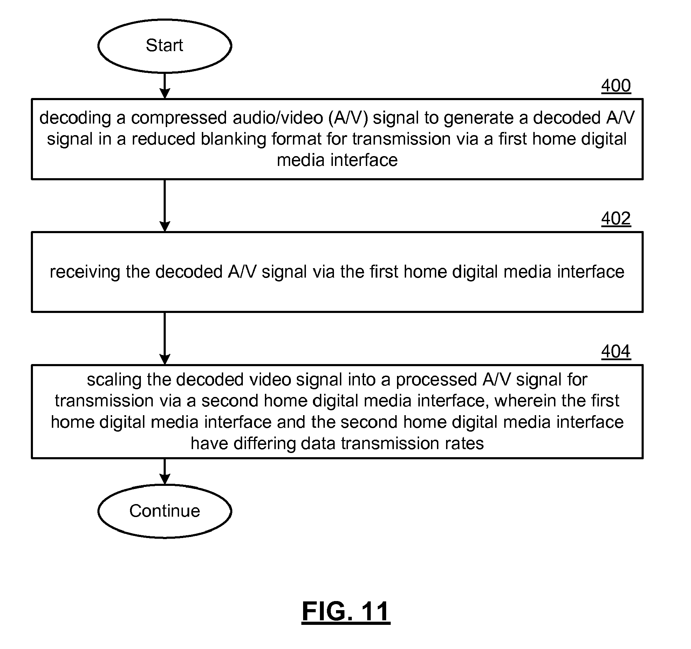

FIG. 11 presents a flow diagram representation of a method in accordance with an embodiment. In particular, a method is presented for use in conjunction with one or more functions and features described in conjunction with FIGs. 1-10. Step 400 includes decoding a compressed audio/video (A/V) signal to generate a decoded A/V signal in a reduced blanking format for transmission via a first home digital media interface. Step 402 includes receiving the decoded A/V signal via the first home digital media interface. Step 404 includes scaling the decoded video signal into a processed A/V signal for transmission via a second home digital media interface, wherein the first home digital media interface and the second home digital media interface have differing data formats.

In an embodiment, the decoded A/V signal includes a 3840x2160p, 60Hz, 10 bit reduced blanking 4:2:0 signal. The compressed A/V signal can include an ultra HD signal. The first home digital media interface can be HDMI 1.4b compliant and the second home digital media interface can be HDMI 2.0 compliant. The decoded A/V signal can be unencrypted. The decoded A/V signal can be scaled by at least one of: a vertical upscaling, a horizontal upscaling, a vertical downscaling and a horizontal downscaling.

While particular combinations of various functions and features of the present invention have been expressly described herein, other combinations of these features and functions are possible that are not limited by the particular examples disclosed herein are expressly incorporated in within the scope of the present invention.

As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item.

As may also be used herein, the terms "processing module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may be, or further include, memory and/or an integrated memory element, which may be a single memory device, a plurality of memory devices, and/or embedded circuitry of another processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a processing module, a functional block, hardware, and/or software stored on memory for performing one or more functions as may be described herein. Note that, if the module is implemented via hardware, the hardware may operate independently and/or in conjunction software and/or firmware. As used herein, a module may contain one or more sub-modules, each of which may be one or more modules.

While particular combinations of various functions and features of the present invention have been expressly described herein, other combinations of these features and functions are likewise possible. The present invention is not limited by the particular examples disclosed herein and expressly incorporates these other combinations.

## Claims

1. A video processing device comprising:
a decoding device that decodes a compressed audio/video (A/V) signal to generate a decoded A/V signal in a reduced blanking format for transmission via a first home digital media interface; and
a reformatting device, coupled to the decoding device, that receives the decoded A/V signal via the first home digital media interface (HDMI) and that scales the decoded A/V signal into a processed A/V signal for transmission via a second home digital media interface, wherein the first home digital media interface and the second home digital media interface have differing data formatting.

2. The video processing device of claim 1 wherein the decoded A/V signal includes a 3840x2160p, 60Hz, 10 bit reduced blanking 4:2:0 signal and wherein the first home digital media interface is HDMI 1.4b compliant and the decoded A/V signal is formatted in accordance with the following HDMI 1.4b parameters:
Hblank = 160
Vblank = 90

3. The video processing device of claim 1 wherein the decoded A/V signal includes a 3840x2160p, 50Hz, 10 bit reduced blanking 4:2:0 signal and wherein the first home digital media interface is HDMI 1.4b compliant and the decoded A/V signal is formatted in accordance with the following HDMI 1.4b parameters:
Hblank = 960
Vblank = 90

4. The video processing device of claim 1, 2 or 3 wherein the compressed A/V signal is an ultra HD signal.

5. The video processing device of any preceding claim wherein the first home digital media interface is HDMI 1.4b compliant and/or the second home digital media interface is HDMI 2.0 compliant.

6. The video processing device of any preceding claim wherein the decoded A/V signal is unencrypted.

7. The video processing device of any preceding claim wherein the reformatting device scales the decoded A/V signal by at least one of: a vertical upscaling and a horizontal upscaling.

8. The video processing device of any of claims 1 to 7 wherein the reformatting device scales the decoded A/V signal by at least one of: a vertical downscaling and a horizontal downscaling.

9. A method comprising:
decoding a compressed audio/video (A/V) signal to generate a decoded A/V signal in a reduced blanking format for transmission via a first home digital media interface;
receiving the decoded A/V signal via the first home digital media interface; and
scaling the decoded A/V signal into a processed A/V signal for transmission via a second home digital media interface, wherein the first home digital media interface and the second home digital media interface have differing data formatting.

10. The method of claim 9 wherein the decoded A/V signal includes a 3840x2160p, 60Hz, 10 bit reduced blanking 4:2:0 signal.

11. The method of claim 9 or 10 wherein the compressed A/V signal is an ultra HD signal.

12. The method of claim 9, 10 or 11 wherein the first home digital media interface is HDMI 1.4b compliant and/or the second home digital media interface is HDMI 2.0 compliant.

13. The method of any of claims 9 to 12 wherein the decoded A/V signal is unencrypted.

14. The method of any of claims 9 to 13 wherein the decoded A/V signal is scaled by at least one of: a vertical upscaling and a horizontal upscaling.

15. The method of any of claims 9 to 14 wherein the decoded A/V signal is scaled by at least one of: a vertical downscaling and a horizontal downscaling.
